# EUROPÄISCHE PATENTSCHRIFT

(11) **EP 0 634 537 B1**
(45) Veröffentlichungstag und Bekanntmachung des Hinweises auf die Patenterteilung: **15.12.1999**
(21) Anmeldenummer: 94108906.2
(22) Anmeldetag: 10.06.1994
(51) Int. Cl.: E04F 13/06, B29C 70/02, B29C 70/24

(54) **Kantenschutzrichtwinkel**
Edge protecting border
Cornière protectrice d'arrête

(30) Priorität: 14.07.1993 DE 4323482
(43) Veröffentlichungstag der Anmeldung: 18.01.1995
(73) Patentinhaber: GEHRING, Manfred, Dr., D-72250 Freudenstadt (DE)
(72) Erfinder: GEHRING, Manfred, Dr., D-72250 Freudenstadt (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 134 039
- FR-A- 2 568 275
- FR-A- 2 628 448
- KUNSTSTOFFE, Bd. 80, Nr. 9, 1990 MÜNCHEN, Seiten 1003-1007, XP 000226455 F. HÖRSCH 'Dreidimensionale Verstärkungsmaterialien für Faserverbundwerkstoffe'
- KUNSTSTOFFBERATER, Bd. 37, Nr. 3, 1992 ISERNHAGEN, Seite 13 XP 000265412 'Faserverstärkung aus Flach-Rovings für Schichtpress-Stoffe'

## Beschreibung

Die Erfindung betrifft einen Kantenschutzrichtwinkel als Eckbewehrung für die auf die Wärmedämmschicht aufzutragende, als Träger für die Sichtputzschicht dienende und mit kunststoffverstärkten Glasfasergewebematten (GFK) bewehrte Spachtelmaterialschicht.

Aus der DE-OS 33 29 963 ist ein gattungsgemäßer Kantenschutzrichtwinkel bekannt. Er weist zwei GF-Gewebestreifen auf, von denen einer als Verstärkungs-Gewebestreifen und der andere als Bewehrungs-Gewebestreifen dient. Beide liegen unmittelbar aneinander und sind in einer Kunststoffschicht aus UP-Harz bzw. EP-Harz eingebettet. Die einzelnen Gewebestreifen bestehen aus Schuß- und Kettfäden, die entweder wechselseitig einander überqueren, oder aber die geradlinig-gestreckt verlaufenden Schußfäden werden an den Kreuzungsstellen außen- und innenseitig von je einem Kettfaden überquert, welche sich zwischen benachbarten Schußfäden kreuzen. Der Verstärkungsgewebestreifen und der Bewehrungsgewebestreifen sind in ihrem Überlappungsbereich vollständig in die Kunststoffschicht eingebettet.

Bei der gattungsgemäßen, aus der EP-PS 0 134 039 bekannten Kantenschutz-Richtwinkelvorrichtung sind der äußere Bewehrungs-Gewebestreifen und der innere Verstärkungs-Gewebestreifen an gleichmäßig über die Anlagefläche der beiden Gewebestreifen verteilten Stellen, an denen Schußfäden des Bewehrungs-Gewebestreifens mit Schußfäden des Verstärkungs-Gewebestreifens aneinander anliegen, in aushärtbaren Kunststoff eingebettet. Nachteilig bei derartigen Einsetzwinkeln ist, daß die aus Gewebe bestehenden Verstärkungsstreifen grobmaschig ausgebildet sind. Innere und äußere Gewebestreifen können zwar vollständig in die Kunststoffschicht eingebettet sein, sind jedoch, insbesondere beim letztgenannten Kantenschutzrichtwinkel, zumeist lediglich an ihren Kreuzungspunkten miteinander durch sie umschließende Kunststoffbrücken verbunden. Sind die beiden Gewebestreifen vollständig in Kunststoff eingebettet, so müssen Perforationen eingestanzt werden, durch die der Spachtelkleber hindurchtreten kann. Durch diese Einstanzungen wird der Kantenschutzrichtwinkel in seiner Stabilität geschwächt.

Aufgabe der Erfindung ist es daher, einen Kantenschutzrichtwinkel der eingangs genannten Art zu schaffen, der eine erhöhte Stabilität, insbesondere Formstabilität, aufweist und auf einfache Weise hergestellt werden kann.

Erfindungsgemäß wird die genannte Aufgabe dadurch gelöst, daß das Winkelprofil durch einem mit aushärtbaren Klebstoff getränkten, Spachtelklebedurchtritt ermöglichenden Glasfaser- oder Naturfaser-Gelegestreifen als Verstärkungs-Gelegestreifen gebildet ist.

Es sind also nicht mehr lediglich eine Lage Kett- und Schußfäden vorhanden, von denen die Schußfäden zwar aus dickeren Faserbündeln, die eine größere Anzahl Einzelfäden aufweisen, bestehen und die Schuß- und Kettfäden sich wechselseitig überqueren, oder aber die Schußfäden an den Kreuzungsstellen außen- und innenseitig von je einem Kettfaden überquert sind, die sich dann zwischen benachbarten Schußfäden kreuzen. Es sind vielmehr mehrere Lagen übereinander liegender Quer-, Längs- und Diagonalfaserbündellagen möglich, wobei nicht mehr die Kettfäden zur Herstellung einer Verbindung zwischen Schuß- und Kettfäden dienen, sondern vielmehr weitere, separate Fäden vorgesehen sind, die die einzelnen Gewebelagen an den Kreuzungspunkten der Faserbündel verknüpfen. Damit kann der Gelegestreifen deutlich engmaschiger ausgebildet werden als ein Gewebestreifen, und er hält aufgrund der Verknüpfungsart auch besser zusammen.

Die Verknüpfung der sich kreuzenden Faserbündel kann dabei bevorzugt durch Vernähen erfolgen. Die Faserbündel der einzelnen Lagen sind jeweils parallel-gestreckt zueinander angeordnet und überqueren einander jeweils unter einem Winkel von etwa 45°. Durch letztere bevorzugte Ausbildung können in der Putzschicht auftretende Kräfte, z.B. aufgrund von witterungs- und/oder tageszeitabhängig auftretenden Erwärmungen bzw. Abkühlungen der Sichtputzschicht, die besonders stark im Eckbereich des Sichtputzes auftreten, aufgenommen und verteilt werden.

Der Verstärkungs-Gelegestreifen wird mit einem aushärtbaren Klebstoff getränkt, wobei es sich hierbei bevorzugt um einen UV-härtbaren Klebstoff handelt. Dadurch, daß das Gelege engmaschiger ausgebildet ist als ein Gewebe, ist es auch besser aushärtbar, da die Faserbündel der einzelnen Gelege besser zusammenhalten.

Weiterbildungen sehen vor, daß die die Gelegestreifenlagen bildenden Faserbündel eine größere Anzahl an Einzelfasern umfassen als die zum Verknüpfen dienenden Fäden. Aufgrund dieser Weiterbildung ist für eine gute Knicksteifigkeit des Winkelprofils sowie für die sichere Aufnahme und Verteilung der in der bewehrten Schicht auftretenden Kräfte gesorgt.

In weiterer bevorzugter Ausgestaltung ist das durch den Verstärkungs-Gelegestreifen gebildete Winkelprofil zusätzlich mit einem GFK-Bewehrungsgewebestreifen versehen, der an dem Verstärkungs-Gelegestreifen unmittelbar anliegt und mittels des aushärtbaren Klebstoffes daran festgelegt ist, wobei die Randstreifen des Bewehrungs-Gewebestreifens über die äußeren Längsränder des verstärkten Winkelprofils des Kantenschutzrichtwinkels hinausragen. Hierdurch wird eine günstige und großflächige Überlappung mit den möglichen, sich anschließenden Glasfaser-Mattenbewehrungen der Spachtelkleberschicht ermöglicht. Aber auch durch diese doppellagige Ausbildung des Winkelprofils wird eine gute Formstabilität und Steifigkeit erzielt. Die Bewehrungs-Gewebestreifen können bereits bei der Herstellung des Kantenschutzrichtwinkels mittels des Klebstoffes mit den Gelegestreifen verbunden werden. Auf diese Weise ist ein einfaches Aufbringen auf die Ecken der zu verputzenden Maueraußenkanten etc. möqlich. Die Verstärkungs-Gelegestreifen sind dabei bevorzugt an der Innenseite des GFK-Bewehrungsgewebestreifens angeordnet oder umgekehrt.

In einer anderen bevorzugten Ausgestaltung des Kantenschutzrichtwinkels ist vorgesehen, daß das durch den Verstärkungs-Gelegestreifen gebildete Winkelprofil zusätzlich einen Bewehrungs-Gelegestreifen umfaßt, der genau wie der Gewebestreifen unmittelbar an dem Verstärkungs-Gelegestreifen anliegend angeordnet ist und mittels des aushärtbaren Klebstoffes daran festgelegt ist. Auch hier ragen die Randstreifen des Bewehrungs-Gelegestreifens über die äußeren Längsränder des verstärkten Winkelprofils des Kantenschutzrichtwinkels hinaus. Dabei ist der Verstärkungs-Gelegestreifen bevorzugt an der Innenseite des Bewehrungs-Gelegestreifens angeordnet oder umgekehrt. Durch diese bevorzugte Ausgestaltung wird für eine verbesserte Formstabilität des Winkelprofils gesorgt. Auch hier können die einzelnen Gelegestreifen bereits bei der Herstellung des Winkelprofils des Kantenschutzrichtwinkels miteinander verbunden werden. Verstärkungs- und Bewehrungs-Gelegestreifen sind dabei formschlüssig miteinander verbindbar und halten durch ihre verbesserte Aushärtbarkeit besser zusammen als Gewebestreifen.

In weiterer bevorzugter Ausgestaltung ist vorgesehen, daß die Verstärkungs-Gelegestreifen feinmaschig ausgebildet sind. Die Maschenweite kann dabei zwischen 0,5 bis 3 mm liegen. In einer anderen bevorzugten Ausgestaltung kann der Verstärkungs-Gelegestreifen grobmaschig mit einer Maschenweite von 3 bis 10 mm gebildet sein. Je nach Anwendung kann die feinmaschige bzw. grobmaschige Ausführungsform des Gelegestreifens gewählt werden. Durch die Maschenweite wird auch bestimmt, wieviel Spachtelmaterial nach außen austreten kann, um im erhärteten Zustand eine besonders gute Fixierung des Winkelprofils zu erzielen. Es wird dabei eine solche Maschenweite gewählt, daß das Verstärkungs- und Bewehrungsgelege bzw. das Verstärkungsgelege und das Bewehrungsgewebe formschlüssig mit hoher Stabilität aneinanderhaften, gleichzeitig aber genügend Spachtelkleber durch die durch die Maschen gebildeten lichten Räume hindurchtreten kann.

Die effektive Dicke des gebildeten Kantenschutzrichtwinkels entspricht vorteilhafterweise der effektiven Gesamtdicke von Bewehrungsgewebe-/-gelegestreifen und Verstärkungs-Gelegestreifen in deren Anlagebereich.

Weitere Vorteile und Merkmale der Erfindung ergeben sich aus den Ansprüchen und aus der nachfolgenden Beschreibung, in der zwei Ausführungsbeispiele eines Verstärkungs-Gelegestreifens unter Bezugnahme auf die Zeichnungen im einzelnen erläutert sind. Dabei zeigt:
- Figur 1: einen stark vergrößerten Teilausschnitt eines Gelegestreifens mit diagonal verlaufenden Maschen;
- Figur 2: einen stark vergrößerten Teilausschnitt eines Gelegestreifens mit diagonal und quadratisch verlaufenden Maschen (multiaxional); und
- Figur 3: einen Kantenschutzrichtwinkel mit Verstärkungs-Gelegestreifen in vereinfachter, abgebrochener, perspektivischer Darstellung.

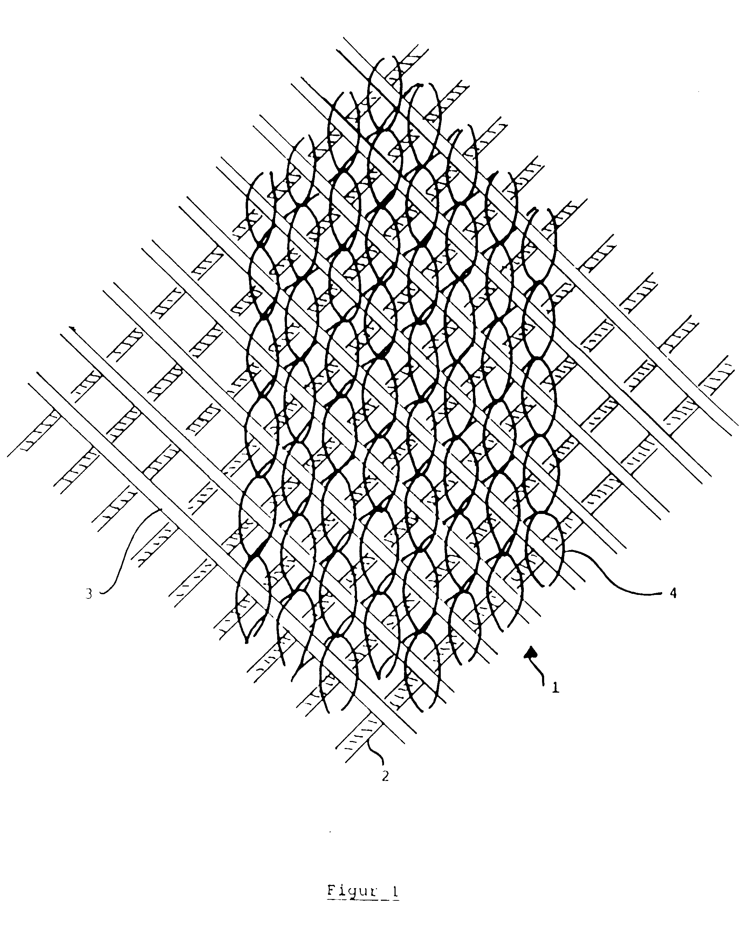

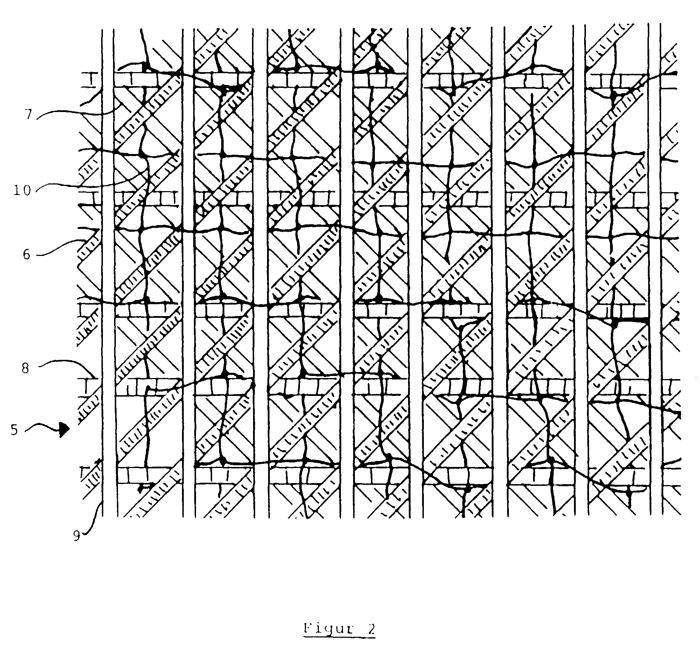

Die in den Figuren 1 und 2 dargestellten Ausführungsformen eines Glasfaser-/Naturfasergeleges dienen zur Verstärkung eines Kantenschutzrichtwinkels. Dieser wird als Eckbewehrung einer Spachtel-Kleber-Schicht verwendet, die zwischen einem auf die Außenwände eines Gebäudes mit Vollwärmeschutzsystem aufgebrachten, die Außenwände des Gebäudes vollständig einhüllenden Wärmedämmantel und der sichtseitigen Außenputzschicht angeordnet ist. Die Spachtel-Kleber-Schicht kann auf bekannte Weise durch großflächige GFK-Gewebematten bewehrt und verstärkt sein. Beim Wärmedämmantel kann es sich um Styroporplatten handeln.

Der erfindungsgemäße Kantenschutzrichtwinkel 11 dient als Träger für die auf das Vollwärmeschutzsystem aufgebrachte Außenputzschicht, so daß diese zuverlässig auf den Außenwänden bzw. dem Wärmedämmantel haftet. Durch einen Kantenschutzrichtwinkel 11 werden die Eckkanten der auf die Außenwände aufgebrachten Wärmedämmplatten, deren Anordnung auch die Eckkante des Sichtputzes bestimmt, vor Beschädigung geschützt, sobald der Spachtelkleber 14 und der Sichtputz aufgebracht werden. Ist es beim Transport oder der Verarbeitung der Wärmedämmplatten etc. zu Beschädigungen der Eckkante gekommen, dann wird durch das Anbringen des Kantenschutzrichtwinkels 11 ein geradliniger Verlauf der Sichtputzschichtkante gewährleistet.

Der in Figur 1 dargestellte, aus Glasfaser oder Naturfaser bestehende Gelegestreifen 1 weist zwei Lagen übereinander angeordneter Faserbündel 2, 3 auf. Bei diesem Ausführungsbeispiel werden durch die zwei Lagen diagonalförmig verlaufende Maschen gebildet sind. Die Faserbündel 2, 3 der einzelnen Lagen kreuzen sich dabei unter einem Winkel von ca. 45°. Dabei verlaufen sämtliche Faserbündel 2, 3 geradlinig gestreckt. An ihren Kreuzungspunkten sind die Faserbündel 2, 3 durch mindestens einen weiteren, separaten Faden 4 miteinander verknüpft, insbesondere vernäht. Des weiteren weisen die Faserbündel 2, 3 eine größere Anzahl an einzelnen Fasern auf als die zum Verknüpfen dienenden Fäden 4. Der lichte Abstand zweier Faserbündel 2, 3 einer Gelegelage ist dabei so gewählt, daß die Maschenweite je nach Anwendung zwischen 0,5 und 10 mm liegt.

In Figur 2 ist ein Glasfaser-/Naturfaser-Gelegestreifen 5 dargestellt, der im dargestellten Ausführungsbeispiel aus vier Lagen von Faserbündeln 6, 7, 8, 9 besteht. Dabei wechseln sich Lagen aus längs bzw. quer verlaufenden Faserbündeln 9, 8 mit Lagen diagonal verlaufender Faserbündel 6, 7 ab. Auch hier sind die einzelnen Lagen an den Kreuzungspunkten der Faserbündel 6, 7, 8, 9 mittels weiterer, separater Fäden 10 verknüpft. Damit bietet die Verwendung von Glasfaser-/Naturfaser-Gelegestreifen 4, 5 bedeutend mehr Möglichkeiten zur Ausgestaltung als dies bei Gewebestreifen gemäß des Standes der Technik möglich ist. Die Gelegestreifen 4, 5 werden jeweils so ausgebildet, wie dies für den jeweiligen Verwendungszweck notwendig ist.

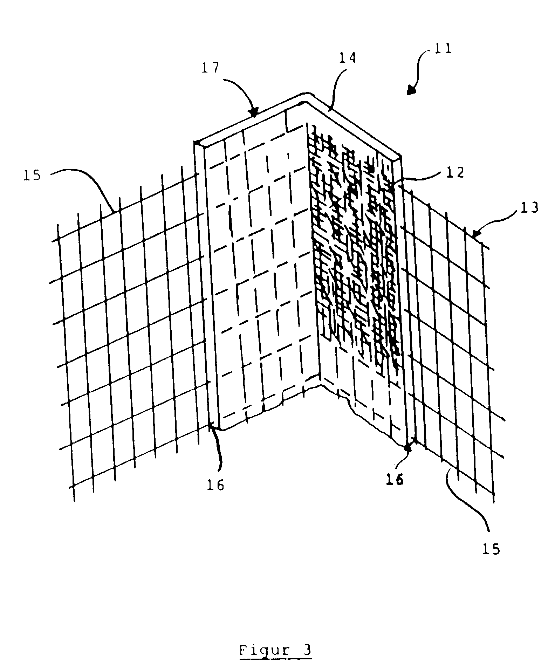

Der in Figur 3 perspektivisch dargestellte Kantenschutzrichtwinkel 11 besteht entweder aus einem Verstärkungs-Gelegestreifen 12 und einem Bewehrungs-Gewebestreifen 13, die unmittelbar aneinanderliegend angeordnet sind und mittels eines UV-härtbaren Klebers 14 miteinander verbunden sind, oder aber er besteht aus zwei Glasfaser-/Naturfaser-Gelegestreifen, wobei einer als Verstärkungs-Gelegestreifen 12 und der andere als Bewehrungs-Gelegestreifen dient. Auch hier sind beide Gelegestreifen durch einen Kleber formschlüssig und kraftschlüssig miteinander verbunden. In Figur 3 sind ein Verstärkungs-Gelegestreifen 12 (nur teilweise gezeichnet) und ein Bewehrungs-Gewebestreifen 13 als eine mögliche Ausführungsform des Kantenschutzrichtwinkels 11 dargestellt. Der Bewehrungs-Gewebe- bzw. Gelegestreifen 13 ragt mit seinen Randstreifen 15 über die äußere Längskante 16 des durch Verstärkungs-Gelegestreifen 12, Kleber 14 und Bewehrungs-Gelegestreifen bzw. Gewebestreifen 13 gebildeten Winkelprofils 17 hinaus. Über diese hinausragenden Randstreifen 16 ist der Kantenschutzrichtwinkel 11 mit zur Bewehrung der Spachtelmaterialschicht dienenden Glasfasergewebematten (GFK) verbindbar.

## Patentansprüche

1. Kantenschutzrichtwinkel als Eckbewehrung für die auf eine Wärmedämmschicht aufzutragende, als Träger für die Sichtputzschicht dienende und mit kunststoffverstärkten Glasfasergewebematten (GFK) bewehrte Spachtelmaterialschicht, dadurch gekennzeichnet, daß das Winkelprofil (17) durch einen mit einem aushärtbaren Klebstoff (14) getränkten, spachtelkleberdurchtritt ermöglichenden Glasfaser- oder Naturfaser-Gelegestreifen (1, 12, 5) als Verstärkungs-Gelegestreifen gebildet ist , wobei der Verstärkungs-Gelegestreifen (1, 12, 5) durch mindestens zwei übereinander gelegte und sich kreuzende Lagen aus Faserbündeln (2 3, 6, 7, 8, 9) gebildet ist und die sich kreuzenden Faserbündel (2, 3, 6, 7, 8, 9) an ihren Kreuzungspunkten durch mindestens einen weiteren, separaten Faden (4, 10) miteinander verknüpft sind.

2. Kantenschutzrichtwinkel nach Anspruch 1, dadurch gekennzeichnet, daß die sich kreuzenden Faserbündel (2, 3, 6, 7, 8, 9) durch den weiteren, separaten Faden (4, 10) miteinander vernäht sind.

3. Kantenschutzrichtwinkel nach Anspruch 1, dadurch gekennzeichnet, daß die Faserbündel (2, 3, 6, 7, 8, 9) der einzelnen Gelegelagen jeweils parallel gestreckt zueinander angeordnet sind.

4. Kantenschutzrichtwinkel nach Anspruch 1 oder 3, dadurch gekennzeichnet, daß die Faserbündel (2, 3, 6, 7, 8, 9) der einzelnen Gelegelagen einander jeweils unter einem Winkel von etwa 45° zur Bildung von quadratischen bzw. diagonalen Maschen kreuzen.

5. Kantenschutzrichtwinkel nach einem der Ansprüche 1-4, dadurch gekennzeichnet, daß der Klebstoff (14) UV-härtbar ist.

6. Kantenschutzrichtwinkel nach einem der Ansprüche 1 oder 5, dadurch gekennzeichnet, daß die die Gelegestreifen bildenden Faserbündel (2, 3, 6, 7, 8, 9) eine größere Anzahl an Einzelfasern umfassen als die zum Verknüpfen dienenden Fäden (4, 10).

7. Kantenschutzrichtwinkel nach einem der vorangehenden Ansprüche, dadurch gekennzeichnet, daß das durch den Verstärkungs-Gelegestreifen (1, 12, 5) gebildete Winkelprofil (17) zusätzlich einen GFK-Bewehrungsgewebestreifen (13) umfaßt, der an den Verstärkungs-Gelegestreifen (1, 5, 12) unmittelbar anliegend angeordnet ist und mittels eines aushärtbaren Klebstoffes (14) daran festgelegt ist, wobei die Randstreifen (15) des Bewehrungs-Gewebestreifens (13) über die äußeren Längsränder (16) des verstärkten Winkelprofils (17) des Kantenschutzrichtwinkels (11) hinausragen.

8. Kantenschutzrichtwinkel nach Anspruch 7, dadurch gekennzeichnet, daß der Verstärkungs-Gelegestreifen (1, 5, 12) an der Innenseite des GFK-Bewehrungsgewebestreifens (13) angeordnet ist.

9. Kantenschutzrichtwinkel nach Anspruch 7, dadurch gekennzeichnet, daß der Verstärkungs-Gelegestreifen (1, 5, 12) an der Außenseite des GFK-Bewehrungsgewebestreifens (13) angeordnet ist.

10. Kantenschutzrichtwinkel nach einem der vorangehenden Ansprüche, dadurch gekennzeichnet, daß das durch den Verstärkungs-Gelegestreifen (1, 12, 5) gebildete Winkelprofil (17) zusätzlich einen Bewehrungs-Gelegestreifen umfaßt, der an den Verstärkungs-Gelegestreifen (1, 5, 12) unmittelbar anliegend angeordnet ist und mittels eines aushärtbaren Klebstoffes (14) daran festgelegt ist, wobei die Randstreifen (15) des Bewehrungs-Gelegestreifens über die äußeren Längsränder (16) des verstärkten Winkelprofils (17) des Kantenschutzrichtwinkels (11) hinausragen.

11. Kantenschutzrichtwinkel nach Anspruch 10, dadurch gekennzeichnet, daß der Verstärkungs-Gelegestreifen (1, 5, 12) an der Innenseite des Bewehrungs-Gelegestreifens angeordnet ist.

12. Kantenschutzrichtwinkel nach Anspruch 10, dadurch gekennzeichnet, daß der Verstärkungs-Gelegestreifen (1, 12, 5) an der Außenseite des Bewehrungs-Gelegestreifens angeordnet ist.

13. Kantenschutzrichtwinkel nach einem der vorangehenden Ansprüche, dadurch gekennzeichnet, daß die Verstärkungs-Gelegestreifen (1, 12, 5) feinmaschig ausgebildet sind.

14. Kantenschutzrichtwinkel nach Anspruch 13, dadurch gekennzeichnet, daß die Maschenweite zwischen 0,5 bis 3 mm liegt.

15. Kantenschutzrichtwinkel nach einem der vorangehenden Ansprüche, dadurch gekennzeichnet, daß die Verstärkungs-Gelegestreifen (1, 12, 5) grobmaschig ausgebildet sind.

16. Kantenschutzrichtwinkel nach Anspruch 15, dadurch gekennzeichnet, daß die Maschenweite zwischen 3 bis 10 mm liegt.

17. Kantenschutzrichtwinkel nach einem der Ansprüche 1 bis 16, dadurch gekennzeichnet, daß die die Faserbündel (2, 3, 6, 7, 8, 9) verknüpfenden bzw. vernähenden Fäden (4, 10) wesentlich dünner als die Faserbündel sind und insbesondere eine Stärke aufweisen, die in der Größenordnung der Stärke von Einzelfäden der Faserbündel (2, 3, 6, 7, 8, 9) liegt.

## Claims

1. Edge protecting border as a corner reinforcement for the filler layer reinforced with plastic-strengthened glass fibre fabric mats (GFK), serving as a support for the parging layer and to be applied to a thermal insulation layer, characterized in that the angle section (17) is formed by a glass or natural fibre interlaid scrim strip (1, 12, 5) as a strengthening interlaid scrim strip, impregnated with a hardenable adhesive (14) and permitting the passage of a filler adhesive, the strengthening interlaid scrim strip (1, 12, 5) being formed by at least two superimposed, crossing layers of fibre bundles (2, 3, 6, 7, 8, 9) and which are interconnected at their intersections by at least one further, separate thread (4, 10).

2. Edge protecting border according to claim 1, characterized in that the intersecting fibre bundles (2, 3, 6, 7, 8, 9) are sewn together by the further, separate thread (4, 10).

3. Edge protecting border according to claim 1, characterized in that the fibre bundles (2, 3, 6, 7, 8, 9) of the individual interlaid scrim layers are in each case stretched parallel to one another.

4. Edge protecting border according to claim 1 or 3, characterized in that the fibre bundles (2, 3, 6, 7, 8, 9) of the individual interlaid scrim layers intersect one another under in each case an angle of approximately 45° for forming square or diagonal meshes.

5. Edge protecting border according to one of the claims 1 to 4, characterized in that the adhesive (14) is UV-hardenable.

6. Edge protecting border according to one of the claims 1 or 5, characterized in that the fibre bundles (2, 3, 6, 7, 8, 9) forming the interlaid scrim strips have a larger number of individual fibres than the threads (4, 10) used for interconnection purposes.

7. Edge protecting border according to one of the preceding claims, characterized in that the angle section (17) formed by the strengthening interlaid scrim strip (1, 12, 5) additionally incorporates a GFK reinforcing fabric strip (13), which directly engages on the strengthening interlaid scrim strip (1, 5, 12) and is fixed thereto by means of a hardenable adhesive (14), the marginal portion (15) of the reinforcing fabric strip (13) projecting over and beyond the outer longitudinal edges (16) of the strengthened angle section (17) of the edge protecting border (11).

8. Edge protecting border according to claim 7, characterized in that the strengthening interlaid scrim strip (1, 5, 12) is placed on the inside of the GFK reinforcing fabric strip (13).

9. Edge protecting border according to claim 7, characterized in that the strengthening interlaid scrim strip (1, 5, 12) is placed on the outside of the GKF reinforcing fabric strip (13).

10. Edge protecting border according to one of the preceding claims, characterized in that the angle section (17) formed by the strengthening interlaid scrim strip (1, 12, 5) additionally incorporates a reinforcing interlaid scrim strip, which engages directly on the strengthening interlaid scrim strip (1, 5, 12) and is fixed thereto by means of a hardenable adhesive (14), the marginal portion (15) of the reinforcing interlaid scrim strip projecting over and beyond the outer longitudinal edges (16) of the strengthened angle section (17) of the edge protecting border (11).

11. Edge protecting border according to claim 10, characterized in that the strengthening interlaid scrim strip (1, 5, 12) is placed on the inside of the reinforcing interlaid scrim strip.

12. Edge protecting border according to claim 10, characterized in that the strengthening interlaid scrim strip (1, 12, 5) is placed on the outside of the reinforcing interlaid scrim strip.

13. Edge protecting border according to one of the preceding claims, characterized in that the strengthening interlaid scrim strips (1, 12, 5) have a small mesh construction.

14. Edge protecting border according to claim 13, characterized in that the mesh size is between 0.5 and 3 mm.

15. Edge protecting border according to one of the preceding claims, characterized in that the strengthening interlaid scrim strips (1, 12, 5) have a large mesh construction.

16. Edge protecting border according to claim 15, characterized in that the mesh size is between 3 and 10 mm.

17. Edge protecting border according to one of the claims 1 to 16, characterized in that the threads (4, 10) linking or sewing the fibre bundles (2, 3, 6, 7, 8, 9) are much thinner than the fibre bundles and in particular have a thickness of the same order of magnitude as the thickness of individual threads of the fibre bundles (2, 3, 6, 7, 8, 9).

## Revendications

1. Cornière protectrice d'arête destinée à constituer une armature d'angle pour la couche d'enduit à appliquer sur une couche de calorifugeage, servant de support pour la couche d'enduit de finition et armée d'un mat en tissu de fibres de verre (GFK) renforcé par du matériau synthétique, caractérisée en ce que le profil d'angle (17) est constitué en bande de mat de renforcement par une bande de mat en fibres de verre ou en fibres naturelles (1,12,5) imprégné d'un adhésif durcissable et permettant le passage de l'enduit, la bande de mat de renforcement (1,12,5) étant constituée par au moins deux couches de faisceaux de fibres (2,3,6,7,8,9) posées l'une sur l'autre et se croisant, et les faisceaux de fibres (2,3,6,7,8,9) qui se croisent étant noués entre eux au niveau de leur point d'intersection par au moins un autre fil séparé (4,10).

2. Cornière selon la revendication 1, caractérisée en ce que les faisceaux de fibres (2,3,6,7,8,9) qui se croisent sont cousus entre eux par l'autre fil séparé (4,10).

3. Cornière selon la revendication 1, caractérisée en ce que les faisceaux de fibres (2,3,6,7,8,9) des couches de mat individuelles sont chacun disposés allongés parallèles par rapport aux autres.

4. Cornière selon l'une quelconque des revendications 1 ou 3, caractérisée en ce les faisceaux de fibres (2,3,6,7,8,9) de chaque couche de mat individuelle se croisent chaque fois à un angle d'environ 45° pour former des mailles carrées ou en diagonale.

5. Cornière selon l'une quelconque des revendications 1-4, caractérisée en ce que l'adhésif (14) est durcissable aux rayons ultraviolets.

6. Cornière selon l'une quelconque des revendications 1 ou 5, caractérisée en ce que les faisceaux de fibres (2,3,6,7,8,9) constituant les bandes de mat comprennent un plus grand nombre de fibres séparées que les fils (4,10) servant à nouer.

7. Cornière selon l'une quelconque des revendications précédentes, caractérisée en ce que le profil d'angle (17) constitué par la bande de mat de renforcement (1,12,5) comprend en plus une bande tissée d'armature en GFK (13), disposée de façon à venir en contact direct avec les bandes de mat de renforcement (1,5,12) et solidarisé à celles-ci par un adhésif (14) durcissable, les bandes de bordure (15) de la bande tissée d'armature (13) faisant saillie au-delà des bords longitudinaux extérieurs (16) du profil d'angle (17) renforcé de la cornière protectrice d'arête (11).

8. Cornière selon la revendication 7, caractérisée en ce que la bande de mat de renforcement (1,5,12) est disposée sur la face intérieure de la bande tissée d'armature (13) en GFK.

9. Cornière selon la revendication 7, caractérisée en ce que la bande de mat de renforcement (1,5,12) est disposée sur la face extérieure de la bande tissée d'armature (13) en GFK.

10. Cornière selon l'une quelconque des revendications précédentes, caractérisée en ce que le profil d'angle (17) constitué par la bande de mat de renforcement (1,12,5) comprend en plus une bande de mat d'armature, disposée en contact direct avec la bande de mat de renforcement (1,5,12) et solidarisée à celle-ci par un adhésif (14) durcissable, les bandes de bordure (15) de la bande de mat d'armature faisant saillie au-delà des bords longitudinaux extérieurs (16) du profil d'angle (17) renforcé de la cornière protectrice d'arête (11).

11. Cornière selon la revendication 10, caractérisée en ce que la bande de mat de renforcement (1,5,12) est disposée sur la face intérieure de la bande de mat d'armature.

12. Cornière selon la revendication 10, caractérisée en ce que la bande de mat de renforcement (1,12,5) est disposée sur la face extérieure de la bande de mat d'armature.

13. Cornière selon l'une quelconque des revendications précédentes, caractérisée en ce que les bandes de mat de renforcement (1,12,5) sont constituées de mailles fines.

14. Cornière selon la revendication 13, caractérisée en ce que la largeur des mailles est comprise entre 0,5 et 3 mm.

15. Cornière selon l'une quelconque des revendications précédentes, caractérisée en ce que les bandes de mat de renforcement (1,12,5) sont constituées de grandes mailles.

16. Cornière selon la revendication 15, caractérisée en ce que la largeur des mailles est comprise entre 3 et 10 mm.

17. Cornière selon l'une quelconque des revendications 1 à 16, caractérisée en ce que les fils nouant ou cousant les faisceaux de fibres (2,3,6,7,8,9) sont sensiblement plus minces que les faisceaux de fibres et présentent en particulier une épaisseur de l'ordre de grandeur de l'épaisseur de fils individuels des faisceaux de fibres (2,3,6,7,8,9).
